# EUROPEAN PATENT SPECIFICATION

(11) **EP 2 165 803 B1**
(45) Date of publication and mention of the grant of the patent: **20.07.2011**
(21) Application number: 08775381.0
(22) Date of filing: 21.05.2008
(51) Int. Cl.: B23Q 17/09

(54) **SYSTEM OF MONITORING AND CONTROL OF THE TOOL AND HEAD OF A MACHINE TOOL**
SYSTEM ZUR ÜBERWACHUNG UND STEUERUNG DES WERKZEUGS UND KOPFS EINER WERKZEUGMASCHINE
SYSTÈME DE SURVEILLANCE ET DE COMMANDE DE L'OUTIL ET DE LA TÊTE D'UNE MACHINE-OUTIL

(30) Priority: 22.05.2007 ES 200701393
(43) Date of publication of application: 24.03.2010
(73) Proprietor: Mondragon Goi Eskola Politeknikoa Jose Maria Arizmendiarrieta, S.COOP., 20500 Arrasate (Guipuzcoa) (ES); Ideko, S. COOP., 20870 Elgoibar (Guipuzcoa) (ES); University College Cardiff Consultants LTD., Gales (GB)
(72) Inventor: GALLEGO NAVAS, Ivan, E-48200 Durango (Vizcaya) (ES); GANDARIAS MINTEGUI, Endika, E-48200 Durango (Vizcaya) (ES); IVANOV IVANOV, Atanas, Gales (GB)
(74) Representative: Cabinet Plasseraud
(86) International application number: PCT/ES2008/000353
(87) International publication number: WO 2008/142188

(56) References cited:
- WO-A1-2006/128892
- US-A- 4 694 686
- US-B1- 6 481 939

## Description

### Field of the Art

The present invention relates to the field of the machine tool and more specifically its preferable application is the control of the state of the tool and of the head in the turning, pecking and milling among others, especially in high-speed micromachining operations, proposing a system which allows monitoring and controlling the microtools used in these applications, providing the machining with higher efficiency.

### State of the Art

Currently, the advance of new technologies has led to the need to generate higher-quality and larger-sized parts.

The fact that the working speed of the machines machining this type of part is higher and furthermore the diameters of the tools are increasingly smaller, providing a higher precision in the machining, is added to the need to manufacture this type of part.

To achieve this objective new micromachining technologies, such as for example micromilling, are used.

Milling is the technique by which the materials are lifted from the base at a certain depth by means of a miller, while micromilling is a milling affecting a reduced depth and area, for the purpose of significantly improving the texture of the application surface, or collaborating in the regularization of said surface.

One of the main drawbacks occurring in cutting processes, such as for example in micromilling, is the detection of the breaking of the tool, the life of which is unpredictable.

While in conventional cutting processes the detection can be carried out by the sound caused by the broken tool, because it is seen or due to cutting force changes, in micromilling especially it is complex to see or/and hear anything, therefore it may occur that the work piece is continue to be acted upon without observing any breaking of the microtool.

### Object of the Invention

According to the present invention a system of monitoring and control of the tool and head for turning, pecking and milling among others, preferably for micromachining operations, is proposed, which is truly advantageous due to its constructive and/or functional features.

The heads of machine tools, regardless of the type of bearing or ball bearing that they use (hydrostatic, hydrodynamic, magnetic or aerostatic bearings, metal or ceramic ball bearings, etc.), are basically formed from a rotating metal shaft called rotary shaft of the head, and from a cylindrical sleeve or ring surrounding it called support of the head.

The use of bearings (except roller bearings) enable the rotary shaft of the head to not be in any contact with the support, both components being separated by a small distance or gap made up either of air or of another fluid. However, if ball bearings (also called roller bearings) are used, the rotary shaft and the support are still separated by a small gap of air, but the shaft is supported on the support as a result of these ball bearings.

In relation to bearings (except roller bearings), since the rotary shaft is not in contact with the support, it is completely electrically insulated from the head and from the machine, both at rest and in movement in normal circumstances.

This electrical insulation of the bearings prevented up until now the generation of an electrical circuit between the work piece and the work tool and, in short, it did not allow adding the implementation of a system of monitoring and control through said electrical circuit.

Ball bearings are in turn formed of a series of materials and components, such as for example the inner (rotary part of a head) and outer (static part of a head) hoop, the rolling element, the cage, the casing, the lubricant, etc. The name of metal or ceramic ball bearings is usually given to those having their rolling elements, at least, of metal and ceramic respectively. Generally, some of the materials of which the ball bearings are formed are usually electric insulators.

The heads using metal ball bearings, when the rotary part is at rest, allow electric current to circulate between the body of the head and the work tool. This is due to the contact occurring between the static part and the rotary part of the ball bearing by means of the (usually pre-stressed) metal rolling elements themselves. However, when the tool starts to rotate, these rolling elements are impregnated with a layer of lubricant making the passage of current impossible. It is therefore impossible to generate an electrical circuit when the rotary part is rotating in normal circumstances.

In addition, high-speed or high-performance machining centers, such as for example micromillers, are characterized by having very high rotation speeds which make it impossible to use metal ball bearings, since the latter heat up and expand, obtaining high machining tolerances and precisions being non-viable.

For this reason it is necessary to use another type of ball bearing, substituting the metal rolling elements with others of different materials, such as for example ceramic materials, which has a low thermal expansion and high rigidity, which makes them especially indicated for this type of application.

Together with the advantage of the low thermal expansion, ceramic materials are furthermore non-electricity conducting materials, therefore the fact of using this type of rolling elements furthermore ensures in this case the electrical insulation of the rotating part of the head when it is at rest (as well as in movement for the same previously mentioned reason for the case of metal rolling elements), i.e., the tool bearing assembly is completely electrically insulated from the head and of the machine in normal circumstances.

This electrical insulation (both for metal and ceramic ball bearings) prevented up until now the generation of a electrical circuit between the work piece and the work tool and, in short, did not allow adding the implementation of a system of monitoring and control through said electrical circuit.

It has been verified, however, that if an electrical signal in a wide range of frequencies is applied between the rotary part and the static part of the head, the rotary shaft-support assembly of the head behaves like a capacitive element, since both components are of metal and have a reduced gap. Likewise, it has been verified that the ball bearing as a whole, both metal and ceramic, behaves like a capacitive element although its capacitance value is usually lower.

Therefore, this capacitive behavior mainly due to the rotary shaft-support assembly of the head, as well as to the ball bearings to a lesser extent, allows the use of an electrical circuit by means of using high frequency. There will therefore be a variation in the electrical circuit when the tool or the head make contact with the piece and when they do not, enabling the identification of the different states.

WO 2006/128892 discloses a system for detecting breakages in the tool of a machine tool, wherein the spindle which supports the tool has electric isolation with respect to the structure of the machine on which the work piece is placed. In this way, an electrical circuit is established between the spindle and the structure by means of a measurement system which enables to determine the status of the tool depending on an electrical variable of the contact between said tool and the work piece, and comparing the signal obtained in said circuit with a reference signal.

The present invention relates to a system of monitoring and control of the tool and head of a machine tool as known from WO 2006/128892 and according to the pre-characterizing part of claim 1, and which is characterized by the characterizing part of claim 1.

Advantageous embodiments of the invention are the subject-matter of dependent claims 2-6.

According to a practical embodiment, the electrical circuit is determined between the head and the table, which circuit incorporates a generator of signals, an impedance (either a resistance, a coil, a capacitor or a combination of the above) and a voltage measuring device, with the particularity that the generator of signals generates an alternating signal close to the frequency at which there is a potential difference when there is no contact between the piece and tool or head and when there is. It has been verified that this frequency is typically comprised between 1 MHz and 60 MHz.

With this frequency, when an electric current induced by the generator of signals is passed through said electrical circuit, the alterations of the circuit, such as when the tool breaks, give rise to variations of voltage in the impedance, such that according to said variations of voltage it can be known whether the tool or the head is in contact with the piece or not.

This is due to the fact that the passage of the current gives rise to a voltage difference between the terminals of the impedance, such that when there is an alteration in the circuit, as occurs when the tool breaks during the work, there is a variation of this voltage in the impedance, the measurement of which allows knowing the breaking of the tool.

According to another embodiment of the invention, it has been provided that the alternating electrical signal obtained in the impedance (either a resistance, a coil, a capacitor or a combination of the above) of the main electrical circuit is transformed into a direct signal through a transformation circuit; such that the voltage obtained in the impedance can be accepted by the system of control (PLC) of the machine.

In another embodiment , the implementation of an optional device in the system has been provided, which device allows automatically knowing in each type of machine the optimal frequency at which the voltage difference in the different states is maximum; such that this device commands the generator of signals so that the signal which the latter applies to the main circuit is set at this preconceived frequency.

A system is thus obtained which allows determining the behavior of a machine in an effective, practical and immediate manner in micromilling, providing truly advantageous features which confer to the application of this system its own identity and a preferred character in the mentioned function.

It should be indicated that although the system of control now proposed has as one of its main applications controlling the work tool and monitoring its situation at all times, in order to thus detect situations such as the breaking of said tool or machine collisions, this application cannot be considered in a limiting sense and the system can be applied for other purposes, such as substituting the tool with another element to be controlled such as a touch probe, such as for example for measurements by means of a conductive touch probe, for the measurement of micrometric geometries, for measurements through the tool itself instead of the use of touch probes, for the work with relative coordinates, for control of the work cycles, intelligent cycles, in the machining of parts, etc. In this sense, the element formed by a material which in normal circumstances is not an electric conductor, can form part of the head of the machine, of the tool, of the work piece and/or of the work table. The considerable impact that it may have in the field of metrology, such as in the machines for measurement by coordinates, should be emphasized.

### Description of the Drawings

Figure 1 shows a schematic depiction of the system object of the invention.
Figure 2 shows a representative graph of the voltage drops occurring in the impedance of the circuit of the system.
Figure 3 shows a schematic depiction of the system object of the invention in impedances; when there is no contact at all (a), when there is contact between the tool and the piece (b), and when there is contact between the head and the piece (c).
Figure 4 shows a schematic circuit of a signal conditioning device.
Figure 5 schematically shows the implementation of an optional device (11) for measuring the optimal frequency which allows finding the maximum voltage difference for the different states.

### Detailed Description of the Invention

The object of the present invention is a system of monitoring and control of the tool and head of a machine tool and is preferably applied to the control of the microtools during the process of micromilling parts, proposing a system which allows monitoring the machine to detect at all times the state of the microtool of the micromachining and of the head.

The heads of machine tools, regardless of the type of bearing or ball bearing that they use (hydrostatic, hydrodynamic, magnetic or aerostatic bearings, metal or ceramic ball bearings, etc.), are basically formed from a rotating metal shaft called rotary shaft of the head, and from a cylindrical sleeve or ring surrounding it called support of the head.

The use of bearings (except roller bearings) enable the rotary shaft of the head to not be in any contact with the support, both components being separated by a small distance or gap made up either of air or of another fluid. However, if ball bearings (also called roller bearings) are used, the rotary shaft and the support are still separated by a small gap of air, is supported on the support as a result of these ball bearings.

In relation to bearings (except roller bearings), since the rotary shaft is not in contact with the support, it is completely electrically insulated from the head and from the machine, both at rest and in movement in normal circumstances.

This electrical insulation of the bearings prevented up until now the generation of an electrical circuit between the work piece and the work tool and, in short, it did not allow adding the implementation of a system of monitoring and control through said electrical circuit.

Ball bearings are in turn formed by a series of materials and components, such as for example the inner (rotary part of a head) and outer (static part of a head) hoop, the rolling element, the cage, the casing, the lubricant, etc. The name of metal or ceramic ball bearings is usually given to those having their rolling elements, at least, of metal and ceramic respectively. Generally, some of the materials of which the ball bearings are formed are usually electric insulators.

The heads (5) used in high-speed machining centers, as well as in high-precision machines, such as micromillers, have ceramic rolling elements between the rotating part and the static part to allow the rotation at high revolutions without affecting the working conditions.

This means that the rotating part of the machining machines, and particularly of micromachining machines is electrically insulated from the rest of the machine when it is rotating in normal circumstances.

It has been verified, however, that if an electrical signal in a wide range of frequencies is applied between the rotary part and the static part of the head, the rotary shaft-support assembly of the head behaves like a capacitive element, since both components are of metal and have a reduced gap. Likewise, it has been verified that the ball bearing as a whole, both metal and ceramic, behaves like a capacitive element although its value is usually small.

Therefore, this capacitive behavior, mainly due to the rotary shaft-support assembly of the head, as well as to the ball bearings to a lesser extent, allows the use of an electrical circuit by means of using high frequency. There will therefore be a variation in the electrical circuit when the tool or the head make contact with the piece and when they do not, enabling the identification of the different states.

In high-speed machining centers, as well as in conventional machining centers, this phenomenon occurs with electrical signals of high frequencies, such that the range of frequencies to be used is generally between 5 and 35 MHz.

However, this range of frequencies varies according to the structure and components of each machine, the range of frequencies being able to vary typically from 1 MHz to 60 MHz.

According to the invention, an electrical circuit is incorporated between the head and the table of a machine, such as a micromiller, by means of which the state of the microtool used can be controlled at any time of the process.

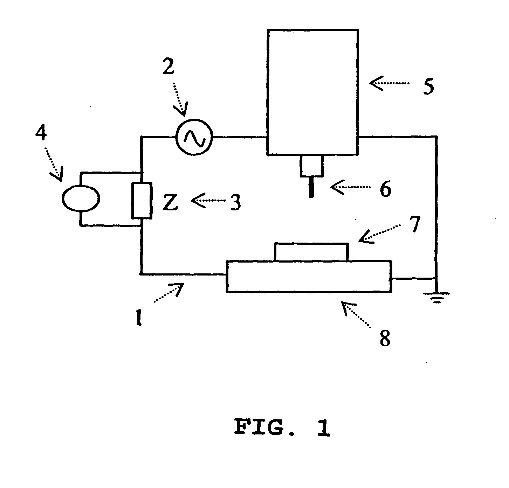

As is observed in Figure 1, the electrical circuit (1) which is applied is formed by a generator of signals (2), an impedance (either a resistance, a coil, a capacitor or a combination of the above) (3) and a voltage measuring device (4), said assembly being connected between the head (5) of the machine, which has the tool (6), and the work table (8) in which the work piece (7) is arranged. The head (5) and the work table (8) are connected to ground, as a protective measure for the use.

The generator of signals (2) generates an alternating signal of 20 volts peak to peak at a variable frequency, with the particularity that said signal will have a frequency comprised between 1 MHz and 60 MHz, making the signal pass to the work table (8) passing through the impedance (3), after which it reaches the generator of signals (2) again.

The voltages measured in the impedance (3) for a machine show when there is contact between the tool or head and the work piece and when there is no such contact.

To explain this phenomenon, the behavior of the machine is analyzed in the case in which there is no contact between the tool (6) or head (5) and the piece (7) and also in the opposite case, in which there is contact between the tool (6) and the piece (7).

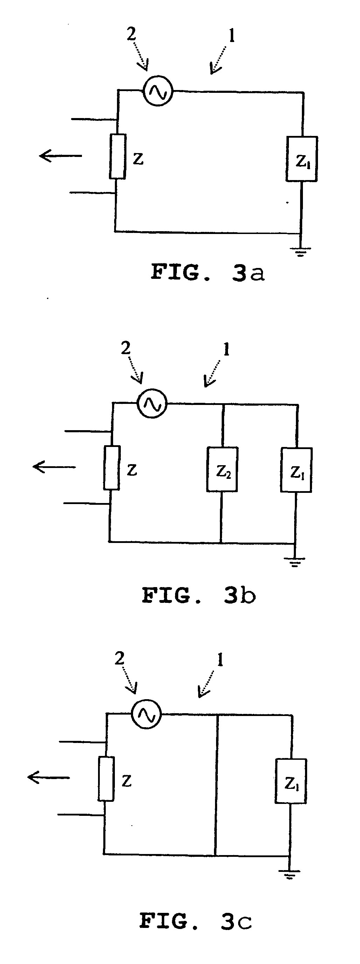

In the first case (Figure 3a), the circuit (1) is closed through the ground connection of both the head (5) and the work table (8), a current circulating through said ground connection path, which current traverses a series of inductances, resistances and capacitances, which form an equivalent impedance (Zl), which varies according to the frequency used in the generation of the signal and depends on the structures and components from which each machine is formed.

When the tool (6) is in contact with the piece (7) (Figure 3b), in the second case, the previous circuit is maintained and a branch is added at which the circuit between the tool (6) and the piece (7) is closed; in this path there is another impedance (Z2), also variable with the frequency.

Unlike the contact between tool-piece, when the head (5) is in contact with the piece (7) (Figure 3c), the branch which is added has a very small impedance, being considered nil (short circuit).

This variation in the circuits and its dependence on the frequency cause a voltage difference in the impedance (Z) (3) when the tool (6) or the head (5) is in contact with the piece (7) with respect to when it is not.

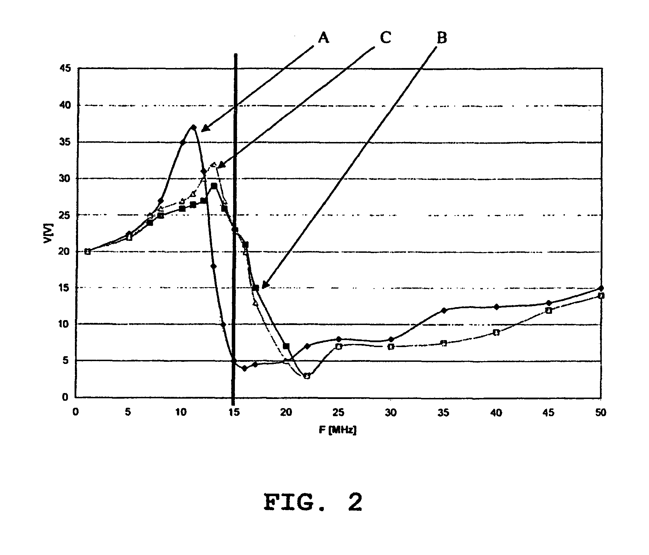

The graph of Figure 2 shows in the y-axis the voltage in volts measured in the impedance (3) for a machine of a specific application and in the x-axis the frequency in MHz of the signal of the generator (2).

In this graph, the reference line (A) means that the tool (6) and the piece (7) are not in contact. The reference line (B) corresponds to the existence of contact between the tool (6) and the piece (7) and the reference line (C) corresponds to the contact between the head (5) and the piece (7).

It can be seen that the maximum variation of voltage between the lines (A) with respect to (B) and (C) occurs in the specific case of this figure at 15 MHz. Indeed, at 15 MHz the voltage measured in the impedance (3) when there is contact (line (B) and line (C)) is 23 volts; whereas when there is no contact (line (A)) 5 volts will be measured, the different of 18 volts being the maximum variation in the entire range of frequencies.

In other words, in the case of this machine, the ideal point at which the system should work is 15 MHz.

In addition, in order for the system to be applicable to a commercial machine, the electrical signal obtained in the impedance (3) must be a signal accepting the system of control of the machine (PLC) (TTL signal).

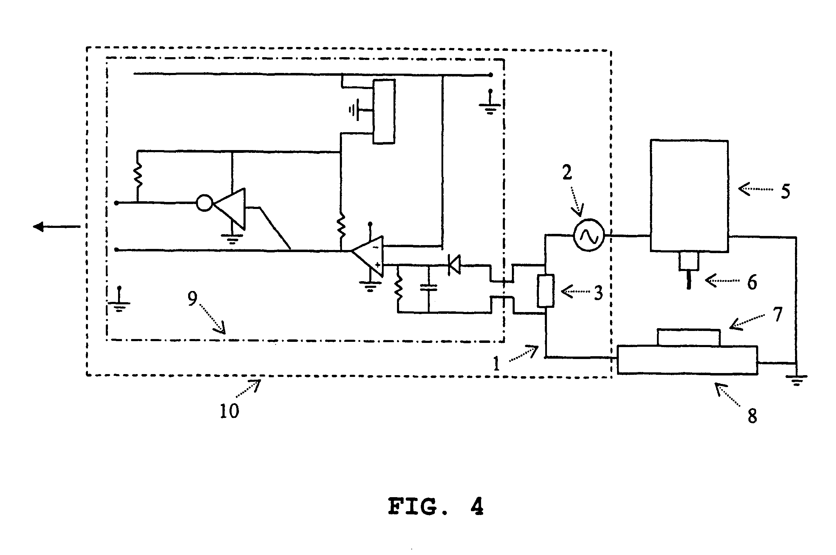

To that end, complementing the main circuit of Figure 1 with a transformation circuit (9), which transforms the alternating signal obtained in the impedance (3) into a direct signal, acceptable by the system of control of the machine (PLC), has been provided, as depicted in Figure 4.

For example, and according to the diagram of Figure 4, the circuit (9) transforms an alternating signal of frequency comprised between 1-60 MHz into a direct signal of 0-5 volts.

It has been provided that, logically, the two circuits, the main circuit and the transformation circuit (9), form a single integrated circuit (10) of direct application to the machine.

And, on a different note, the implementation of a device capable of automatically detecting the corresponding optimal frequency for machines with metal as well as ceramic ball bearings is provided.

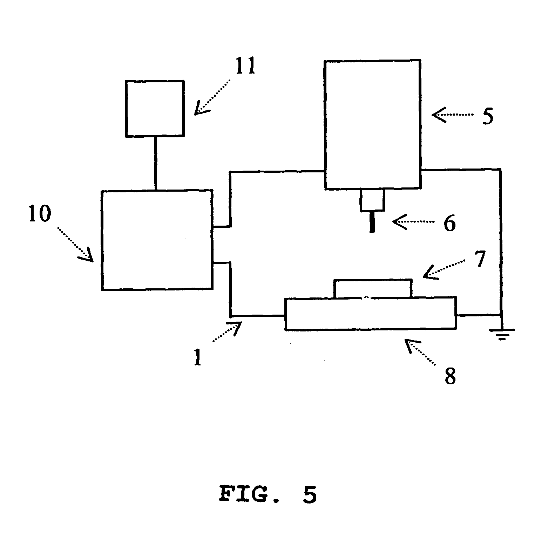

Figure 5 depicts a diagram in which said automatic detection device is indicated with reference number (11). The device (11) will detect the range of frequency in which there is a variation of the potential difference in the impedance both for contact and for non-contact and, not only that, but within said range it will also detect which is the ideal frequency (maximum variation in the potential difference), which in the case of the application example of the graph of Figure 2 would be 15 MHz, then establishing that the generator of signal (2) operates at said frequency.

Due to its concept and operation, the proposed system can also be used for other applications, in addition to the one described for the control of the tool (6) and specifically for the detection of the breaking of the tool (6), as well as for the detection of collisions between the head and the work table. Other applications can be, for example, for measurements by means of a conductive touch probe, for the measurement of micrometric geometries, for measurements through the tool itself instead of the use of touch probes, for the work with relative coordinates, for control of the work cycles, intelligent cycles, in the machining of parts, etc. And in this sense, the element which is not an electric conductor in normal circumstances, but which becomes a conductor at a certain electrical signal frequency, can be in the head of the machine, in the tool, in the work piece and/or in the work table.

Specifically, some of the various possible applications are:
- Online tool breaking detection. While machining, the breaking of the tool is detected as soon as the measured voltage varies.
- "Online" collision·detection. In the event that the tool is in rapid advance and the system detects a contact, an automatic movement stop order is sent and the CNC shows a collision screen, preventing structural damages to the machine.
- Measurements by means of a conductive touch probe. The system allows, using a conductive touch probe, carrying out the same operations as with current touch probes.
- Measurement of micrometric geometries (holes, etc.). The lower limit in contact tip diameters (in touch probes), currently supplied by companies, is about 0.3 mm. In this system, tips of the order or several microns can be used, which allows measuring smaller geometries.
- Measurements with a tool. The system allows carrying out measurements with the tool itself, which involves the following advantages:
   - A touch probe is not required. The same functions can be carried out with a tool.
   - Errors due to expansions and other imprecision sources are reduced. Currently, the measurements are carried out by means of touch probes which are not rotating and therefore the machines are at a certain temperature. However, upon loading the tool there is first a positioning imprecision, and furthermore a heating of the head due to the fact that the tool will be rotating.
   - The only small drawback is the indentation left when the tool contacts with the piece. Nevertheless, the depth of this indentation can be controlled with the advance speed of the head and allows obtaining parts with submicrometric marks.
   - Possibility of working with relative coordinates. It is currently impossible to carry out ultraprecise machining operations in components without machining the surface. This is due to the fact that the measurements are carried out at a temperature lower than the machining temperature and tool change errors. By means of this system, those problems are solved and high-precision relative machining operations can be carried out.
   - Minimization of positioning times. The immediate detection of the contact allows carrying out those movements which are not machining movements at high advance speeds, reducing said speed to the working speed as soon as the contact is detected. This allows reducing cycle times and, in short, increasing the productivity of the machine.
   - Intelligent cycles. The adaptation of this signal in the different existing cycles allows a better operation and a higher productivity of the system. By way of example, the pecking cycle will be explained, in which the bit gradually pecks in steps of increasingly greater depths. The introduction of this signal allows:
      - If in the rapid positioning of the tool, it detects contact: stop machine and show collision screen.
      - If it detects contact at work advances before time: stop machine and show bad tool adjustment or programming error screen.
      - If it does not detect work advances after it should: stop machine and show bad tool adjustment or programming error screen.
      - If once machined, it detects that there is no contact: stop machine and show tool breaking

Likewise, the use as a coordinate measurement system (CMM) is possible, making the contact tip of the touch probe (normally made of ruby) of conductive material. This system allows, by means of using small advances and fine contact tips, the measurement of components with ultra-high precisions.

## Claims

1. A system of monitoring and control of the tool and head of a machine tool, of the type of systems using the generation of an electrical circuit (1) between the tool (6) or head (5) and the work piece (7), to monitor through said circuit the behavior of the machine; wherein in said electrical circuit (1) there is at least an element formed by a material which in normal circumstances is not an electric conductor; and said electrical circuit incorporates a generator of signals (2) generating an alternating signal, the frequency of said signal being comprised between values high enough to capture a variation of the signal in an impedance (3) of the mentioned circuit (1), **characterized in that** in the application of the system to micromilling machines the generator of signals (2) generates a signal the frequency of which is typically comprised between 1 and 60 MHz, in which frequency there is a variation of the potential difference in the impedance (3) of the circuit, the frequency of said signal being preferably comprised between 5 and 35 MHz.

2. The system of monitoring and control of the tool and head of a machine tool according to claim 1, **characterized in that** the element formed by a material which in normal circumstances is not an electric conductor can form part of the head (5) itself of the machine, of the tool (6), of the work piece (7) and/or of the work table (8) of the machine.

3. The system of monitoring and control of the tool and head of a machine tool according to claims 1 and 2, **characterized in that**, according to a practical embodiment, the electrical circuit (1) is formed by the generator of signals (2), the impedance (either a resistance, a coil, a capacitor or a combination of the above) (3) and a signal measuring device (4), which are connected to one another and between the head (5) which has the tool (6) and the table (8) on which the work piece (7) is arranged.

4. The system of monitoring and control of the tool and head of a machine tool according to claims 1, 2 and 3, **characterized in that** it has been provided that the main circuit (1) is complemented with a transformation circuit (9) transforming the alternating signal obtained in the impedance (3) into a direct signal which can be coupled the system of control of the machine (PLC); this transformation circuit (9) and the main circuit (1) being able to be formed by a single integrated circuit.

5. The system of monitoring and control of the tool and head of a machine tool according to claim 1, **characterized in that** in micromilling machines, the element formed by a material which is not an electric conductor is the rotary shaft-support assembly of the head, as well as the ball bearings themselves of the head (5) if there are any.

6. The system of monitoring and control of the tool and head of a machine tool according to claim 1, **characterized in that** the implementation of a device (11) in the system has been provided, which device is intended to automatically detect the range of frequencies, in which there is a variation in the signal of the electrical circuit between contact and non-contact, and within said range the optimal frequency for said variation.

## Patentansprüche

1. System zur Überwachung und Steuerung des Werkzeugs und des Kopfes einer Werkzeugmaschine von der Art von Systemen, die das Bilden eines Stromkreises (1) zwischen dem Werkzeug (6) oder Kopf (5) und dem Werkstück (7) nutzen, um mittels des Stromkreises das Verhalten der Maschine zu überwachen; wobei in dem Stromkreis (1) mindestens ein Element vorhanden ist, das durch ein Material gebildet wird, das unter normalen Umständen kein elektrischer Leiter ist; und wobei der Stromkreis einen Signalgenerator (2) enthält, der ein Wechselstromsignal erzeugt, wobei die Frequenz des Signals zwischen Werten liegt, die hoch genug sind, um eine Veränderung des Signal in einer Impedanz (3) des Stromkreises (1) zu erfassen, **dadurch gekennzeichnet, dass** bei der Anwendung des Systems auf Mikrofräsmaschinen der Signalgenerator (2) ein Signal erzeugt, dessen Frequenz in der Regel zwischen 1 und 60 MHz liegt, wobei in dieser Frequenz eine Veränderung des Potenzialunterschiedes in der Impedanz (3) des Stromkreises stattfindet, wobei die Frequenz des Signals vorzugsweise zwischen 5 und 35 MHz liegt.

2. System zur Überwachung und Steuerung des Werkzeugs und des Kopfes einer Werkzeugmaschine nach Anspruch 1, **dadurch gekennzeichnet, dass** das Element, das durch ein Material gebildet wird, das unter normalen Umständen kein elektrischer Leiter ist, einen Teil des Kopfes (5) der Maschine selbst, des Werkzeugs (6), des Werkstücks (7) und/oder des Arbeitstisches (8) der Maschine bilden kann.

3. System zur Überwachung und Steuerung des Werkzeugs und des Kopfes einer Werkzeugmaschine nach den Ansprüchen 1 und 2, **dadurch gekennzeichnet, dass**, gemäß einer praktischen Ausführungsform, der Stromkreis (1) durch den Signalgenerator (2), die Impedanz (entweder ein Widerstand, eine Spule, ein Kondensator oder eine Kombination aus diesen Bauelementen) (3) und ein Signalmessgerät (4) gebildet wird, die miteinander und zwischen dem Kopf (5), der das Werkzeug (6) trägt, und dem Tisch (8), auf dem das Werkstück (7) angeordnet ist, verbunden sind.

4. System zur Überwachung und Steuerung des Werkzeugs und des Kopfes einer Werkzeugmaschine nach den Ansprüchen 1, 2 und 3, **dadurch gekennzeichnet, dass** es dergestalt konfiguriert ist, dass der Hauptstromkreis (1) durch eine Transformationsschaltung (9) ergänzt ist, die das in der Impedanz (3) erhaltene Wechselstromsignal in ein Gleichstromsignal transformiert, das mit dem Steuerungssystem der Maschine (PLC) gekoppelt werden kann; wobei diese Transformationsschaltung (9) und der Hauptstromkreis (1) durch einen einzelnen integrierten Schaltkreis gebildet werden können.

5. System zur Überwachung und Steuerung des Werkzeugs und des Kopfes einer Werkzeugmaschine nach Anspruch 1, **dadurch gekennzeichnet, dass** in Mikrofräsmaschinen das Element, das durch ein Material gebildet wird, das kein elektrischer Leiter ist, die Drehwellenhalterungsbaugruppe des Kopfes sowie die Kugellager des Kopfes (5) selbst, sofern vorhanden, ist.

6. System zur Überwachung und Steuerung des Werkzeugs und des Kopfes einer Werkzeugmaschine nach Anspruch 1, **dadurch gekennzeichnet, dass** die Implementierung eines Gerätes (11) in dem System vorgesehen ist, wobei dieses Gerät dafür gedacht ist, automatisch den Frequenzbereich, in dem eine Änderung in dem Signal des Stromkreises zwischen Kontakt und Nichtkontakt stattfindet, und innerhalb des Bereichs die optimale Frequenz für die Änderung zu detektieren.

## Revendications

1. Système de surveillance et de commande de l'outil et de la tête d'une machine-outil, appartenant au type de systèmes qui utilisent la génération d'un circuit électrique (1) entre l'outil (6) ou la tête (5) et la pièce à usiner (7), de façon à surveiller le comportement de la machine par l'intermédiaire dudit circuit ; dans lequel il y a, dans ledit circuit électrique (1), au moins un élément réalisé dans un matériau qui n'est pas un conducteur électrique dans des circonstances normales ; et ledit circuit électrique incorpore un générateur de signaux (2) qui génère un signal alternatif, la fréquence dudit signal étant comprise entre des valeurs assez élevées pour détecter une variation du signal dans une impédance (3) du circuit mentionné (1), **caractérisé en ce que**, dans l'application du système à des machines de micro-fraisage, le générateur de signaux (2) génère un signal dont la fréquence est comprise en général entre 1 MHz et 60 MHz, fréquence dans laquelle il y a une variation de la différence de potentiel dans l'impédance (3) du circuit, la fréquence dudit signal étant comprise de préférence entre 5 MHz et 35 MHz.

2. Système de surveillance et de commande de l'outil et de la tête d'une machine-outil selon la revendication 1, **caractérisé en ce que** l'élément réalisé dans un matériau qui n'est pas un conducteur électrique dans des circonstances normales, peut faire partie de la tête (5) elle-même de la machine, de l'outil (6), de la pièce à usiner (7) et/ou de la table d'usinage (8) de la machine.

3. Système de surveillance et de commande de l'outil et de la tête d'une machine-outil selon les revendications 1 et 2, **caractérisé en ce que**, selon un mode de réalisation pratique, le circuit électrique (1) est formé par le générateur de signaux (2), par l'impédance (une résistance ou une bobine ou un condensateur ou une combinaison d'éléments précédents) (3) et par un dispositif de mesure de signal (4) qui sont connectés les uns aux autres et entre la tête (5) où est disposé l'outil (6) et la table (8) sur laquelle est disposée la pièce à usiner (7).

4. Système de surveillance et de commande de l'outil et de la tête d'une machine-outil selon les revendications 1, 2 et 3, **caractérisé en ce qu'**il a été prévu que le circuit principal (1) soit complété avec un circuit de transformation (9) qui transforme le signal alternatif obtenu dans l'impédance (3) en un signal continu qui peut être couplé au système de commande de la machine (PLC) ; ce circuit de transformation (9) et le circuit principal (1) pouvant être formés par un seul circuit intégré.

5. Système de surveillance et de commande de l'outil et de la tête d'une machine-outil selon la revendication 1, **caractérisé en ce que** dans des machines de micro-fraisage, l'élément réalisé dans un matériau qui n'est pas un conducteur électrique est l'ensemble support d'un arbre tournant de la tête, avec les roulements à billes eux-mêmes de la tête (5) s'il y en a.

6. Système de surveillance et de commande de l'outil et de la tête d'une machine-outil selon la revendication 1, **caractérisé en ce que** la mise en oeuvre d'un dispositif (11) dans le système a été prévue, lequel dispositif est destiné à détecter de manière automatique la plage de fréquences où il y a une variation dans le signal du circuit électrique entre un contact et une absence de contact et, à l'intérieur de ladite plage, la fréquence optimale pour ladite variation.
